# EUROPÄISCHE PATENTSCHRIFT

(11) **EP 3 828 518 B1**
(45) Veröffentlichungstag und Bekanntmachung des Hinweises auf die Patenterteilung: **14.08.2024**
(21) Anmeldenummer: 20209696.2
(22) Anmeldetag: 25.11.2020
(51) Int. Cl.: G01G 21/22, G01G 21/23, G01G 21/28

(54) **WAAGE**
SCALES
BALANCE

(30) Priorität: 29.11.2019 LU 101509; 29.11.2019 DE 202019106652 U
(43) Veröffentlichungstag der Anmeldung: 02.06.2021
(73) Patentinhaber: Soehnle Industrial Solutions GmbH, 71522 Backnang (DE)
(72) Erfinder: Wassermann, Felix, 70372 Stuttgart (DE); Christof, Hans, 70180 Stuttgart (DE)
(74) Vertreter: Hoffmann, Jürgen

(56) Entgegenhaltungen:
- WO-A1-2013/056381
- GB-A- 2 507 806
- JP-A- 2012 098 164

## Beschreibung

Die Erfindung betrifft eine Waage mit einem oberen Träger und mit einem unteren Träger, die über eine von den Trägern separat hergestellte Wägezelle miteinander verbunden sind, wobei der obere Träger als Hohlkörper ausgebildet ist, der wenigstens einen Hohlraum aufweist, und/oder wobei der untere Träger als Hohlkörper ausgebildet ist, der wenigstens einen Hohlraum aufweist.

Aus DE 10 2010 060 606 A1 ist eine Tisch- oder Plattformwaage mit einer oberen Rahmenkonstruktion (oberer Träger) und einer unteren Rahmenkonstruktion (unterer Träger) bekannt, die über eine Wägezelle miteinander verbunden sind, wobei mindestens eine, vorzugsweise beide Rahmenkonstruktionen, einstückig aus einer monolithischen Platte gefertigt sind. Es ist hierbei vorgesehen, dass jede Rahmenkonstruktion an ihrem äußeren Umfangsrand teilweise abgewinkelte Bereiche aufweist, die quer zur Hauptfläche der Platte angeordnet sind, so dass Kantenwinkel ausgebildet sind. Trotz dieser randseitigen Abkantungen kann in der Praxis zumeist nur durch Verwendung besonders dicker Stahlplatten eine gewisse Steifigkeit und damit ein akzeptables Nachschwingverhalten sowie eine akzeptable Verformung der Wägeplattform nach dem Auflegen des Wägegutes erzielt werden, was im Ergebnis nachteiliger Weise zu einem hohen Gewicht der gesamten Waage führt. Ein verbessertes Nachschwingverhalten nach dem Auflegen des jeweiligen Wägegutes lässt sich bei derartigen Waagen zwar durch Rahmenkonstruktionen mit zusätzlichen Versteifungen, insbesondere mit zusätzlichen Versteifungen im Bereich der Ankopplung der Wägezelle, erreichen. Diese Versteifungen müssen jedoch aufwändig zusätzlich angefertigt sowie aufgeklebt, angeschweißt oder anderweitig an der jeweiligen Platte befestigt werden.

Aus GB 250 78 06 A ist eine Feinwaage bekannt, deren Standbasis, die sämtliche übrigen Bauteile der Feinwaage trägt, ein Strangpressteil aufweist. Die Feinwaage weist außerdem einen auf einem Schaft angeordneten Wiegeteller auf sowie eine Abdeckhaube zum Schutz des Wiegetellers vor Luftbewegungen auf.

Aus JP 2012 098 164 A ist eine Personenwaage mit zwei gleichen Trägern bekannt, die über eine Wägezelle miteinander verbunden sind. Die Träger jeweils aus miteinander verbundenen Rechteckrohren gebildet.

Es ist daher die Aufgabe der vorliegenden Erfindung, eine Waage anzugeben, die besonders stabil und beschädigungssicher ausgebildet ist.

Die Aufgabe wird durch eine Waage der eingangs genannten Art gelöst, die dadurch gekennzeichnet ist, dass
a. der obere Träger und/oder der untere Träger durch ein additives Verfahren, insbesondere durch 3D-Druck oder durch Laminated Object Manufacturing (LOM) oder dass durch Selektives Lasersintern (SLS), hergestellt sind oder dass der obere Träger und der untere Träger jeweils aus einem Strangpressprofil hergestellt sind, und/oder dass
b. in dem Hohlraum wenigstens eine elektrische Leitung, insbesondere zu der Wägezelle, verläuft und/oder eine elektronische Schaltungsanordnung und/oder ein elektrischer Energiespeicher und/oder ein Spannungsversorgungsgerät angeordnet ist

Die erfindungsgemäße Waage hat den ganz besonderen Vorteil, dass sie mit einem geringen Gewicht ausgebildet werden kann und ihre Träger dennoch stabil und biegesteif sind und dass elektrische und elektronische Bauteile der Waage geschützt anordenbar sind.

Der obere Träger kann (insbesondere als Hohlkammerprofil) durch ein additives Herstellverfahren oder mittels Strangpressen, insbesondere als Strangpressprofil, hergestellt sein. Insbesondere kann der obere Träger durch einen 3D-Druck oder durch Laminated Object Manufacturing (LOM) oder durch Selektives Lasersintern (SLS) oder als Strangpressprofil hergestellt sein. Auch der untere Träger kann vorteilhaft, insbesondere als Hohlkammerprofil, durch ein additives Herstellverfahren oder mittels Strangpressen, insbesondere als Strangpressprofil, hergestellt sein. Insbesondere kann der untere Träger durch einen 3D-Druck oder durch Laminated Object Manufacturing (LOM) oder durch Selektives Lasersintern (SLS) oder als Strangpressprofil hergestellt sein. Diese Herstellverfahren erlauben vorteilhaft insbesondere das Ausbilden von Hohlräumen an Stellen des herzustellenden Trägers, die für spanabhebende oder schleifende Werkzeuge, wie beispielsweise Fräser oder Bohrer, nicht erreichbar sind. Insbesondere können einstückig vollkommen geschlossene Hohlkammern gebildet werden.

Die erfindungsgemäße Waage hat den ganz besonderen Vorteil, dass sie, insbesondere wenn die Träger aus einem Strangpressprofil hergestellt sind, ein zeitlich sehr kurzes Nachschwingverhalten nach dem Auflegen des Wägegutes zeigt, weil wenigstens einer der Träger, vorzugsweise beide Träger, bei geringem Eigengewicht ganz besonders steif ausgebildet werden können.

Eine Herstellung des oberen Trägers und/oder des unteren Träger aus einem Hohlkammerprofil, insbesondere einem Strangpressprofil, hat den ganz besonderen Vorteil, dass eine einfache und kostengünstige Massenproduktion ermöglicht ist, obwohl die Größe jeder Waage dennoch zumindest hinsichtlich der Länge individuell vorgegeben werden kann. Insbesondere kann vorteilhaft vorgesehen sein, dass ein Rohholkammerprofil, insbesondere eine Rohstrangpressprofil, bereitgestellt wird, das eine Länge von mehreren Metern oder sogar deutlich mehr aufweist. Von diesem Rohholkammerprofil, insbesondere eine Rohstrangpressprofil, kann dann ein Teil zur Herstellung des oberen Trägers und kann ein weiterer Teil zur Herstellung des unteren Trägers abgetrennt werden.

Die Hohlräume des oberen und/oder des unteren Trägers können seitlich offen (offenzellig) oder seitlich geschlossen (geschlossenzellig) sein.

Ein als Hohlkörper hergestellter Träger, insbesondere wenn er mehrere Hohlkammern aufweist, ist von besonderem Vorteil, weil er bei geringem Eigengewicht ganz besonders steif ausgebildet werden kann. Die erfindungsgemäße Waage hat daher den ganz besonderen Vorteil, dass sie, wie bereits erwähnt, ein zeitlich sehr kurzes Nachschwingverhalten nach dem Auflegen des Wägegutes zeigt.

Insbesondere können der obere Träger und/oder der untere Träger ohne ein Zusammenfügen mehrerer Teile einstückig hergestellt sein. Allerdings ist es durchaus möglich, zusätzlich Bauteile an dem Träger anzuordnen und/oder den Träger, beispielsweise mittels zusätzlicher Verstärkungsteile, zusätzlich zu verstärken. Allerdings ist es im Sinne einer einfachen und kostengünstigen Herstellung bevorzugt, keine zusätzlichen Verstärkungsteile anzubringen.

Die erfindungsgemäßen Aspekte sind vorteilhaft unabhängig von dem Typ der Waage umsetzbar. Ganz besonders vorteilhaft kann die Waage beispielsweise als Tischwaage ausgebildet sein. Insbesondere kann die Waage als Babywaage ausgebildet sein. Es ist allerdings beispielsweise auch möglich, dass die erfindungsgemäße Waage als Bodenwaage insbesondere für Personen, Vieh oder Fahrzeuge ausgebildet ist. Besonders vorteilhaft kann die erfindungsgemäße Waage beispielsweise als Plattform-, Balken- oder Fahrzeugwaage ausgebildet sein.

Bei einer besonders vorteilhaften Ausführung, die mit wenigen Bauteilen auskommt, sind der obere Träger und der untere Träger unmittelbar anliegend mit der Wägezelle verbunden. Es ist alternativ jedoch auch möglich, dass der obere Träger und/oder der untere Träger unter Zwischenschaltung wenigstens eines weiteren Bauteils, beispielsweise einer Zwischenscheibe, indirekt mit der Wägezelle verbunden sind.

Bei einer besonderen Ausführung weist die Waage genau eine Wägezelle auf, die die Träger direkt oder indirekt verbindet. Insbesondere bei einer solchen Ausführung kann die Wägezelle vorteilhaft als Plattformwägezelle ausgebildet sein, um zu erreichen, dass das Wiegeergebnis unabhängig davon ist, wo die Gewichtskraft des Wägegutes auf den oberen Träger einwirkt.

Alternativ kann die Waage, insbesondere wenn eine große Auflagefläche für das zu wiegende Gut benötigt wird, auch mehrere von den Trägern separat hergestellte und verteilt angeordnete Wägezellen aufweisen, die direkt oder indirekt mit den Trägern wirkverbunden sind.

Bei einer ganz besonders vorteilhaften Ausführung sind der obere Träger und der untere Träger gleich ausgebildet. Die Verwendung von Gleichteilen vereinfacht den Herstellprozess.

Eine solche Ausführung hat insbesondere den ganz besonderen Vorteil, dass der obere Träger und der untere Träger abgetrennte Abschnitte desselben Rohhohlkammerprofils, insbesondere Rohstrangpressprofils, sein können oder dass der obere Träger und der untere Träger abgetrennte Abschnitte von zwei gleichen Rohhohlkammerprofilen, insbesondere Rohstrangpressprofilen, sein können. Dies hat den ganz besonderen Vorteil, dass zur Herstellung der Waage nur eine einzige Art eines Rohhohlkammerprofils, insbesondere Rohstrangpressprofils, hergestellt werden muss, wobei aus diesem Rohmaterial sowohl der obere Träger, als auch der untere Träger hergestellt werden kann. Das Rohhohlkammerprofil kann insbesondere ein Rohstrangpressprofil sein.

Zumindest kann jedoch vorteilhaft vorgesehen sein, dass der obere Träger und der untere Träger die gleiche Form aufweisen. Beispielsweise ist es möglich, von demselben Rohhohlkammerprofil (insbesondere Rohstrangpressprofil) ein längeres Stück und ein kürzeres Stück abzutrennen, wobei eines der Stücke als oberer Träger verwendet wird, während das andere der Stücke als unterer Träger verwendet wird. In diesem Fall haben der obere Träger und der untere Träger zwar im Querschnitt die gleiche Form, jedoch nicht die gleiche Größe. Es ist allerdings natürlich auch möglich und vorteilhaft, wenn der untere Träger und der obere Träger gleich groß sind.

Bei einer anderen Ausführungsform ist vorgesehen, dass der obere und der untere Träger von unterschiedlichartigen Rohhohlkammerprofilen (insbesondere Rohstrangpressprofilen) stammen. Insoweit können der obere Träger und der untere Träger auch eine unterschiedliche äußere oder innere Form, insbesondere eine unterschiedliche innere Struktur und/oder eine unterschiedliche Breite, aufweisen.

Bei einer ganz besonders vorteilhaften Ausführung sind der obere Träger und der untere Träger spiegelsymmetrisch zueinander angeordnet. Eine solche Ausführung erlaubt in ganz besonders einfacher Weise die Verwendung von Gleichteilen für den oberen und den unteren Träger. Darüber hinaus bietet eine solche Ausführung den besonderen Vorteil, dass die Anbindung der Wägezelle an den oberen Träger genauso ausgebildet sein kann, wie die Anbindung der Wägezelle an den unteren Träger.

Bei einer Ausführung, bei der zur Herstellung Strangpressprofile verwendet wurden, kann vorteilhaft vorgesehen sein, dass die Strangpressrichtung des oberen Trägers und die Strangpressrichtung des unteren Trägers zueinander parallel sind. Es ist allerdings alternativ beispielsweise auch möglich, dass die Strangpressrichtung des oberen Trägers und die Strangpressrichtung des unteren Trägers in der Projektion auf die Horizontalebene senkrecht zueinander angeordnet sind. Mit dem Begriff Strangpressrichtung ist die Erstreckungsrichtung des fertig hergestellten Trägers gemeint, entlang der bei der Herstellung das Strangpressen erfolgt ist.

Der obere Träger kann vorteilhaft eine von der Wägezelle weg gerichtete Oberseite aufweisen, auf der das Wägegut unmittelbar positionierbar ist. Die Oberseite kann insbesondere eben sein. Es ist jedoch auch möglich, die Oberseite gewölbt, beispielsweise in Form einer Mulde für ein zu wiegendes Baby, auszubilden.

Alternativ ist es jedoch auch möglich, dass der obere Träger eine von der Wägezelle weg gerichtete Oberseite aufweist, die ein Abdeckelement, insbesondere eine Abdeckhaube, trägt. Das Abdeckelement kann bei einer solchen Ausführung die Wiegefläche aufweisen, auf der das Wägegut positionierbar ist. Das Abdeckelement kann vorteilhaft beispielsweise als Abdeckhaube ausgebildet sein. Die Abdeckhaube kann beispielsweise derart ausgebildet sein, dass sie passgenau über den oberen Träger gestülpt werden kann.

Es ist allerdings auch möglich, dass das Abdeckelement, insbesondere in Form einer Abdeckhaube, größer ausgebildet ist, als der obere Träger und insoweit an einer Kante, vorzugsweise an allen vier Kanten, übersteht. Auf diese Weise ist es möglich eine Wiegefläche bereitzustellen, die deutlich größer ist, als der obere Träger. Dies hat den besonderen Vorteil, dass auch dann das gleiche Rohhohlkammerprofil (insbesondere Rohstrangpressprofil) als Ausgangsmaterial für den oberen und den unteren Träger verwendet werden kann, wenn eine Wiegefläche benötigt wird, die größer ist als das Rohhohlkammerprofil (insbesondere Rohstrangpressprofil) breit ist. An der Unterseite der Abdeckung können vorteilhaft Anschläge vorhanden sein, die sich an dem oberen Träger abstützen und die gewährleisten, dass das Abdeckelement nicht seitlich verrutscht.

Erfindungsgemäß weist der obere Träger wenigstens einen Hohlraum auf und/oder ist als Hohlkammerprofil mit wenigstens einem Hohlraum ausgebildet. Alternativ oder zusätzlich kann in analoger Weise vorgesehen sein, dass der untere Träger wenigstens einen Hohlraum aufweist und/oder dass der untere Träger als Hohlkammerprofil mit wenigstens einem Hohlraum ausgebildet ist. Dies hat den ganz besonderen Vorteil, dass bei geringem Gewicht eine ganz besonders hohe Stabilität und Steifigkeit erreicht werden kann. Hierzu kann zusätzlich insbesondere vorgesehen sein, dass in dem Hohlraum wenigstens eine Stützstrebe und/oder ein Fachwerk angeordnet sind der wenn die Wände, die die Hohlräume voneinander Trennen, als Stützstrebe und/oder ein Fachwerk fungieren.

Die wenigstens eine Hohlkammer muss nicht zwingend allseitig geschlossen sein, was jedoch auch möglich ist. Insbesondere kann die Hohlkammer an einer Seite oder an zwei Seiten geöffnet sein. Insbesondere können die Hohlkammern eines Trägers auch durch die einzelnen Waben einer Wabenstruktur des Trägers gebildet sein. Beispielsweise bei einem Träger, der aus einem Strangpressprofil hergestellt ist, kann die Hohlkammer an einander gegenüberliegenden Seiten offen sein.

Der obere Träger kann beispielsweise aus einem Hohlkammerprofil, das insbesondere mehrere Hohlräume aufweisen kann, hergestellt sein. Auch der untere Träger kann vorteilhaft aus einem Hohlkammerprofil, das insbesondere mehrere Hohlräume aufweisen kann, hergestellt sein.

Bei einer ganz besonders vorteilhaften Ausführung verläuft in dem Hohlraum wenigstens eine elektrische Leitung. Auf diese Weise ist vorteilhaft erreicht, dass die elektrische Leitung vor Beschädigung, Verschmutzung und unerwünschter Manipulation geschützt ist. Die elektrische Leitung kann beispielsweise zu der Wägezelle und/oder zu einer elektronischen Schaltungsanordnung, insbesondere einer Wägeelektronik und/oder eine Anzeigeelektronik, die in dem Hohlraum angeordnet ist, verlaufen.

In dem Hohlraum kann vorteilhaft eine elektronische Schaltungsanordnung, insbesondere eine Wägeelektronik und/oder eine Anzeigeelektronik, angeordnet sein. Eine solche Ausführung hat den ganz besonderen Vorteil, dass die elektronische Schaltungsanordnung vor Beschädigung, Manipulation und Verschmutzung geschützt untergebracht ist. Alternativ oder zusätzlich können in dem Hohlraum ein Spannungsversorgungsgerät und/oder ein Energiespeicher, wie beispielsweise in Akku oder eine Batterie, angeordnet sein.

Bei einer besonders vorteilhaften Ausführung ist der obere Träger in Bezug auf alle durch den oberen Träger verlaufenden horizontalen Ebenen asymmetrisch ausgebildet. Analog kann, alternativ oder zusätzlich, vorteilhaft vorgesehen sein, dass der untere Träger in Bezug auf alle durch den unteren Träger verlaufenden horizontalen Ebenen asymmetrisch ausgebildet ist. Eine solche Ausführung hat den besonderen Vorteil, dass die unterschiedlichen Seiten der Träger speziell für ihre Funktion ausgebildet sein können. So hat beispielsweise die von der Wägezelle weg gerichtete Oberseite des oberen Trägers die Aufgabe, das Wägegut zu tragen, während die zur Wägezelle hin gerichtete Seite des oberen Trägers derart ausgebildet sein muss, dass eine zuverlässige mechanische Anbindung an die Wägezelle ermöglicht ist. Gleiches gilt analog auch für den unteren Träger, der einerseits an die Wägezelle (direkt oder indirekt) mechanisch angebunden sein muss und der andererseits beispielsweise Standfüße aufweist.

Besonders vorteilhaft ist eine Ausführung, bei der der obere Träger in Bezug auf eine (bei Verwendung von Strangpressprofilen insbesondere in Strangpressrichtung verlaufende) vertikale Ebene symmetrisch ausgebildet ist, und/oder bei der der untere Träger in Bezug auf eine (bei Verwendung von Strangpressprofilen insbesondere in Strangpressrichtung verlaufende) vertikale Ebene symmetrisch ausgebildet ist. Eine solche Ausführung ist aufgrund der Symmetrie besonders unempfindlich gegenüber dem Auflagepunkt des Wägegutes und erlaubt eine besonders einfache Grundkonstruktion der Waage.

Der obere Träger kann alternativ in Bezug auf alle (bei Verwendung von Strangpressprofilen insbesondere in Strangpressrichtung verlaufende) vertikalen Ebenen (insbesondere in Bezug auf die Mittelebene) asymmetrisch ausgebildet sein. Genauso kann, alternativ oder zusätzlich, der untere Träger in Bezug auf alle (bei Verwendung von Strangpressprofilen insbesondere in Strangpressrichtung verlaufende) vertikalen Ebenen (insbesondere in Bezug auf die Mittelebene) asymmetrisch ausgebildet sein. Eine solche Ausführung erlaubt insbesondere die Längserstreckungsrichtung der Wägezelle senkrecht zur Strangpressrichtung anzuordnen.

Es ist es zum Erreichen einer großen Stabilität bei besonders geringem Eigengewicht des jeweiligen Trägers von besonderem Vorteil, wenn sich der Träger zu wenigstens einem seiner Ränder hin in Bezug auf seine Höhe verjüngt. Von besonderem Vorteil ist es jedoch insbesondere, wenn sich der (obere und/oder untere) Träger zu zwei zueinander parallelen Rändern hin in Bezug auf seine Höhe verjüngt. Eine solche Ausführung erlaubt insbesondere eine symmetrische Realisierung und erlaubt es außerdem, in einem Mittelbereich eine besonders große Stabilität zu erreichen, was von besonderem Vorteil ist, da dort in aller Regel die Wägezelle angebunden wird. Die Belastung auf die Träger ist bekanntlich im Bereich der mechanischen Anbindung an die Wägezelle stets am größten. Dieser Erfindungsgedanke kann auch als eigenständiger Erfindungsgedanke, losgelöst davon, ob der untere und/oder obere Träger als Hohlkörper ausgebildet ist und/oder einen Hohlraum aufweist, vorteilhaft umgesetzt werden, um eine hohe Stabilität bei gleichzeitig geringem Gewicht zu erreichen. Insoweit können der untere und/oder obere Träger beispielsweise auch aus einem Vollmaterial (ohne Hohlräume) hergestellt sein. Der eigenständige Erfindungsgedanke umfasst auch eine Kombination mit wenigstens einem der übrigen in dieser Anmeldung genannten technischen Aspekte, insbesondere mit wenigstens einem der in den Ansprüchen 1 bis 5 und 7 bis 15 genannten Merkmale.

Insbesondere kann vorteilhaft vorgesehen sein, dass sich der obere Träger in eine Richtung senkrecht zur Strangpressrichtung in Bezug auf seine Höhe verjüngt, und/oder dass sich der untere Träger in eine Richtung senkrecht zur Strangpressrichtung in Bezug auf seine Höhe verjüngt. Eine solche Ausführung ist besonders einfach und kostengünstig herstellbar.

Insbesondere kann vorteilhaft vorgesehen sein, dass sich der obere Träger in eine Richtung senkrecht zur Längserstreckungsrichtung seiner Hohlkammern in Bezug auf seine Höhe verjüngt, und/oder dass sich der untere Träger in eine Richtung senkrecht zur Längserstreckungsrichtung seiner Hohlkammern in Bezug auf seine Höhe verjüngt. Eine solche Ausführung ist besonders einfach und kostengünstig herstellbar.

Ganz allgemein ist der obere Träger vorzugsweise flach ausgebildet, um eine niedrigere Bauhöhe zu erreichen. Gleiches gilt analog vorzugsweise auch für den unteren Träger.

Der obere Träger kann vorteilhaft eine von der Wägezelle abgewandte ebene Außenseite aufweisen. Diese Außenseite kann insbesondere als die oben bereits erwähnte Oberseite für das Auflegen des Wägegutes sein. Auch der untere Träger kann vorteilhaft eine von der Wägezelle abgewandte, ebene Außenseite aufweisen, von der beispielsweise Standfüße hervorstehen können.

Bei einer besonders vorteilhaften Ausführung weist der obere Träger eine der Wägezelle zugewandte Außenseite auf, die in einem Mittelbereich (bei Verwendung von Strangpressprofilen insbesondere entlang der Strangpressrichtung) eben ausgebildet ist. Eine solche Ausführung erlaubt es, die Wägezelle in dem Mittelbereich stabil und zuverlässig an den oberen Träger anzubinden. Zusätzlich kann vorteilhaft vorgesehen sein, dass die Außenseite des oberen Trägers ausgehend von dem Mittelbereich jeweils zum Rand hin gekrümmt, insbesondere konkav gekrümmt, ausgebildet ist.

Bei einer besonders vorteilhaften Ausführung weist der untere Träger eine der Wägezelle zugewandte Außenseite auf, die in einem Mittelbereich (bei Verwendung von Strangpressprofilen insbesondere entlang der Strangpressrichtung) eben ausgebildet ist. Eine solche Ausführung erlaubt es, die Wägezelle in dem Mittelbereich stabil und zuverlässig an den unteren Träger anzubinden. Zusätzlich kann vorteilhaft vorgesehen sein, dass die Außenseite des unteren Trägers ausgehend von dem Mittelbereich jeweils zum Rand hin gekrümmt, insbesondere konkav gekrümmt, ausgebildet ist.

Bei einer besonderen Ausführung trägt der obere Träger wenigstens eine stirnseitig angeordnete Abdeckung. Alternativ oder zusätzlich kann vorteilhaft vorgesehen sein, dass der untere Träger wenigstens eine stirnseitig angeordnete Abdeckung trägt. Eine solche Ausführung hat den besonderen Vorteil, dass die Öffnungen der Hohlräume der Träger abgedeckt und damit geschlossen sind. In den Hohlräumen angeordnete Bauteile, insbesondere wenigstens eine Schaltungsanordnung und/oder wenigstens eine elektrische Leitung und/oder wenigstens ein elektrischer Energiespeicher und/oder wenigstens ein Spannungsversorgungsgerät, sind hierdurch besonders zuverlässig vor einer Manipulation, einer Beschädigung und vor Verschmutzung geschützt.

Bei einer besonderen Ausführung weist die Abdeckung wenigstens einen Durchbruch für wenigstens eine elektrische Leitung oder für wenigstens eine Befestigungsschraube auf. Von dem Begriff elektrische Leitung sind im Sinne dieser Anmeldung insbesondere Drähte, Litzen, Kabel, Bänder, Schienen und insbesondere solche, die wenigstens eine isolierende Umhüllung aufweisen, erfasst.

Die Träger können vorteilhaft aus einem Metall, insbesondere aus Aluminium, Edelstahl, Magnesium oder Titan, oder aus einer Metalllegierung, insbesondere einer Metalllegierung, die Aluminium, Edelstahl, Magnesium und/oder Titan beinhaltet, gefertigt sein. Alternativ ist es allerdings auch möglich, dass die Träger aus Kunststoff gefertigt sind. Die Verwendung dieser Materialien ist bei einer Herstellung auf der Basis von Strangpressprofilen ebenso möglich, wie bei der Herstellung wenigstens einer der Träger durch ein additives Verfahren, wie beispielsweise durch 3D-Druck oder durch Laminated Object Manufacturing (LOM) oder durch Selektives Lasersintern (SLS).

Vorzugsweise ist der Verformungskörper der Wägezelle nicht als Strangpressteil hergestellt.

Bei einer vorteilhaften Ausführung der erfindungsgemäßen Waage ist wenigstens ein Anschlagelement vorhanden, das einen Überlastanschlag aufweist. Insbesondere kann das Anschlagelement an dem oberen oder an dem unteren Träger befestigt sein. Besonders vorteilhaft kann das Anschlagelement an dem oberen oder an dem unteren Träger durch eine Klemmverbindung, insbesondere ausschließlich durch eine Klemmverbindung, befestigt sein. Die Überlastsicherung kann vorteilhaft derart ausgebildet sein, dass einer der Träger an dem Überlastanschlag anschlägt, bevor die maximal zulässige Belastung der Waage überschritten wird. Beispielsweise kann das Anschlagelement an dem unteren Träger derart befestigt und derart angeordnet sein, dass der obere Träger an dem Überlastanschlag anschlägt, bevor die maximal zulässige Belastung der Waage überschritten wird. Auf diese Weise wird die Wägezelle im Fall einer Überbelastung mechanisch kurzgeschlossen und so vor einer Beschädigung geschützt.

Insbesondere bei der Verwendung eines Hohlkammerprofils (insbesondere eines Strangpressprofils mit Hohlkammern) lässt sich das Anschlagelement (bzw. lassen sich die Anschlagelemente) in Verbindung mit einem Gummielement (bzw. mehreren Gummielementen) besonderes einfach und dennoch zuverlässig form- und/oder kraftschlüssig mit dem Hohlkammerprofil verbinden, insbesondere ohne dass ein zusätzliches Gewindeschneiden als zusätzlicher Prozessschritt beispielsweise für eine Verschraubung nötig wäre. Das Hohlkammerprofil wird dazu lediglich einseitig aufgebohrt und es kann jeweils ein Gummielement form- und/oder kraftschlüssig in die Bohröffnung eingesteckt werden. Durch das Einstecken des beispielsweise als Stange ausgeführten Anschlagelements in das so in dem Träger verankerte Gummielement kann (bei geeigneter Wahl der Durchmesser) eine sichere kraftschlüssige und/oder formschlüssige Verbindung hergestellt werden. Somit kann vorteilhaft bspw. eine aufwendige Verschraubung mit vorhergehendem Gewindeschneiden zum Befestigen des Anschlagelements entfallen. Allerdings ist es gemäß der vorliegenden Erfindung nicht ausgeschlossen, das Anschlagelement (bzw. die Anschlagelemente) mittels einer Schraubverbindung oder mittels einer stoffschlüssigen Verbindung zu befestigen.

Auf die geschilderte Weise können - alternativ oder zusätzlich - auch andere Bestandteile der Waage an dem oberen oder dem unteren Träger befestigt sein. Beispielsweise ist es vorteilhaft möglich, eine Libelle auf die geschilderte Weise an dem oberen oder dem unteren Träger zu befestigen.

Nach einem eigenständigen Erfindungsgedanken ist eine Waage besonders vorteilhaft, die (unabhängig davon, ob auch ein unterer Träger vorhanden ist) einen oberen Träger aufweist, der mit einer von dem Träger separat hergestellten Wägezelle verbunden ist, wobei der Träger als Hohlkörper ausgebildet ist, der wenigstens einen Hohlraum aufweist.

Bei einer solchen Ausführung kann ein unterer Träger vorhanden sein. Alternativ ist es jedoch beispielsweise auch möglich, dass mehrere Wägezellen vorhanden sind, wobei jede Wägezelle einerseits mit dem oberen Träger und andererseits mit jeweils einem eigenen Standfuß verbunden ist. Eine solche Waage kann vorteilhaft beispielsweise als Fahrzeugwaage ausgebildet sein. Insbesondere kann eine solche Waage auch mehrere obere Träger aufweisen.

Insbesondere auch bei einer solchen Ausführung kann der obere Träger durch ein additives Herstellverfahren, insbesondere durch 3D-Druck oder durch Laminated Object Manufacturing (LOM) oder durch Selektives Lasersintern (SLS), hergestellt sein. Alternativ kann der der obere Träger vorteilhaft aus einem Strangpressprofil hergestellt sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine perspektivische Detailansicht eines ersten Ausführungsbeispiels einer erfindungsgemäßen Waage,
- Fig. 2: eine andere Detailansicht des ersten Ausführungsbeispiels einer erfindungsgemäßen Waage,
- Fig. 3: eine Detailansicht eines zweiten Ausführungsbeispiels einer erfindungsgemäßen Waage,
- Fig. 4: eine Detailansicht eines dritten Ausführungsbeispiels einer erfindungsgemäßen Waage,
- Fig.5: eine Detailansicht eines vierten Ausführungsbeispiels einer erfindungsgemäßen Waage,
- Fig. 6: eine Detailansicht eines fünften Ausführungsbeispiels einer erfindungsgemäßen Waage, und
- Fig.7: eine Detailansicht eines Ausführungsbeispiels einer Waage nach einem eigenständigen Erfindungsgedanken.

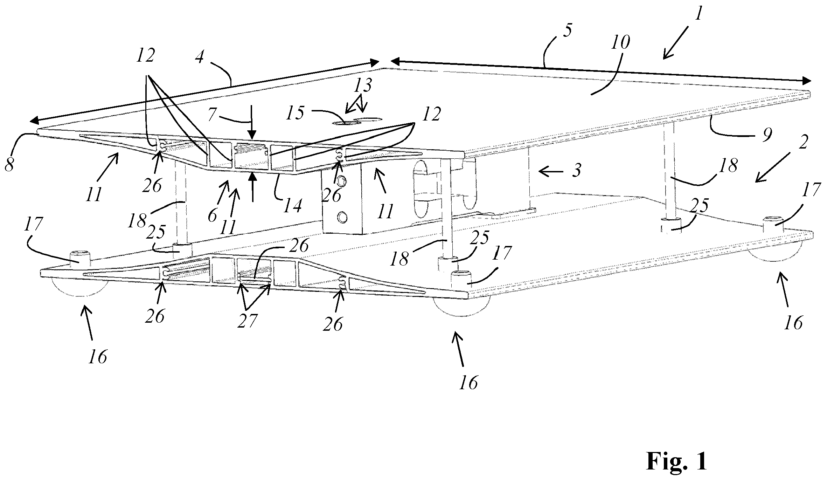

Figur 1 zeigt eine Detailansicht eines ersten Ausführungsbeispiels einer erfindungsgemäßen Waage. Die Waage weist einen oberen Träger 1 und einen unteren Träger 2 auf, die über eine von den Trägern 1, 2 separat hergestellte Wägezelle 3 miteinander verbunden sind. Der obere Träger 1 und der untere Träger 2 sind als Hohlkammerprofile jeweils aus einem Strangpressprofil hergestellt.

Der obere Träger 1 weist in einem sich entlang der Strangpressrichtung erstreckenden Mittenbereich 6 eine Höhe 7 auf, die kleiner ist, als seine sich entlang der Strangpressrichtung erstreckende Länge 4, und die kleiner ist, als seine Breite 5. Ausgehend von dem Mittenbereich 6 verjüngt sich der obere Träger 1 zu einem ersten Rand 8 hin. Außerdem verjüngt sich der obere Träger 1 ausgehend von dem Mittenbereich 6 zu einem zweiten Rand 9 hin. Der erste Rand 8 und der zweite Rand 9 sind zueinander parallel.

Der obere Träger 1 weist eine von der Wägezelle 3 weg gerichtete rechteckige Oberseite 10 auf. Die Oberseite 10 kann als Wiegefläche ausgebildet sein, auf der das Wägegut unmittelbar positionierbar ist. Alternativ kann auch vorgesehen sein, dass auf die Oberseite noch ein (in dieser Figur nicht dargestelltes) Abdeckelement, insbesondere eine Abdeckhaube, aufgesetzt wird. Die Abdeckhaube kann insbesondere derart ausgebildet sein, dass sie umlaufend den Spalt zwischen dem oberen Träger 1 und dem unteren Träger 2 seitlich abdeckt.

Der obere Träger 1 weist eine der Wägezelle 3 zugewandte Außenseite 11 auf, die in dem Mittenbereich 6 eben ausgebildet ist und die ausgehend von dem Mittenbereich jeweils bis zu den Rändern 8, 9 hin gekrümmt ausgebildet ist.

Der obere Träger 1 weist einen Hohlraum auf, in dem mehrere Stützstreben 12 angeordnet sind. Die Stützstreben 12 unterteilen den Hohlraum in mehrere Teilhohlräume. Die Stützstreben 12 sind als sich in Strangpressrichtung erstreckende Wände ausgebildet, die vorzugsweise senkrecht zur Oberfläche 10 ausgerichtet sind.

In die Wandungen eines der Hohlräume sind Befestigungselemente 26 integriert, die ein Elektronikbauteil, nämlich eine Elektronikplatine 27, halten.

Der obere Träger 1 ist mittels zweier (nicht dargestellter) Befestigungsschrauben mit der Wägezelle 3 verbunden. Die Wägezelle 3 weist hierfür (nicht dargestellte) Gewindebohrungen auf, in die die (nicht dargestellten) Befestigungsschrauben eingedreht sind. Der obere Träger 1 weist auf seiner Oberseite zwei Durchgangsbohrungen 13 auf, deren Durchmesser größer ist, als die Köpfe der Befestigungsschrauben. Außerdem weist der obere Träger 1 an einem ebenen Quersteg 14 des Mittenbereichs 6 zwei Durchgangsbohrungen auf. Der Durchmesser jeder Durchgangsbohrung ist größer, als der Schaft der Befestigungsschraube, jedoch kleiner als deren Kopf. Auf diese Weise ist es ermöglicht, die (nicht dargestellten) Befestigungsschrauben von der Oberseite herkommend einzuschrauben, wobei sich die Köpfe der Befestigungsschrauben im vollständig eingeschraubten Zustand in dem Hohlraum des oberen Trägers 1 befinden. In eine der Durchgangsbohrungen 13 wurde nach dem Anschrauben an die Wägezelle 3 eine Dosenlibelle 15 eingesetzt, die es dem Benutzer ermöglicht zu kontrollieren, ob die Waage waagerecht aufgestellt wurde.

Der untere Träger 2 ist im Wesentlichen genauso aufgebaut und genauso groß, wie der obere Träger 1.

Insbesondere kann vorteilhaft vorgesehen sein, dass sowohl der obere Träger 1, als auch der untere Träger 2 gleichlange Abschnitte sind, die von demselben Rohstrangpressprofil oder zwei gleichen Rohstrangpressprofilen, beispielsweise durch Sägen oder Laserschneiden, abgetrennt wurden.

An dem unteren Träger 2 sind Standfüße 16 angeordnet. Die Standfüße 16 können vorteilhaft aus einem elastischen Material, beispielsweise Gummi, hergestellt sein. Die Standfüße 16 weisen jeweils einen Befestigungsschaft 17 mit einer (nicht dargestellten) umlaufenden Rastnut auf. Dies ermöglicht es, die Standfüße 16 dadurch an dem unteren Träger 2 zu befestigen, dass sie einfach durch entsprechende Durchgangsbohrungen in dem unteren Träger 2 gesteckt werden, bis sie einrasten. Die Standfüße 16 könnten alternativ beispielsweise auch durch einen Kraftschluss befestigt werden, wobei jeweils die Durchgangsbohrung einen geringeren Durchmesser aufweist, als der Befestigungsschaft, so dass eine Klemmwirkung erzielt wird. Alternativ könnten auch Stellfüße mit Gewindestangen eingesetzt werden.

Die Waage weist eine Überlastsicherung auf. Der untere Träger 2 trägt hierzu mehrere Anschlagelemente, nämlich Stangen 18, deren oberes Ende im unbelasteten Zustand der Waage in einem Abstand zu dem oberen Träger 1 enden. Die oberen Enden der Stangen 18 fungieren als Überlastanschläge in der Weise, dass der obere Träger 1 auf den oberen Enden der Stangen 18 zu liegen kommt, bevor die maximal zulässige Belastung der Waage überschritten wird. Auf diese Weise wird die Wägezelle 3 im Fall einer Überbelastung mechanisch kurzgeschlossen und so vor einer Beschädigung geschützt.

Durch die Verwendung eines Strangpressprofils mit Hohlkammern zur Herstellung des unteren Trägers lassen sich die Stangen 18 z.B. in Verbindung mit Gummielementen 25 besonders einfach und dennoch zuverlässig form- und kraftschlüssig mit dem Strangpressprofil verbinden, ohne dass beispielsweise ein zusätzliches Gewindeschneiden als zusätzlicher Prozessschritt für eine Verschraubung nötig wäre. Das Hohlprofil wird dazu einseitig aufgebohrt und es kann ein Gummielement 25 formschlüssig eingeklemmt werden. Durch das Einstecken der Stange 18 in das Gummielement 25 kann durch eine geeignete Wahl des Durchmessers eine zusätzliche kraftschlüssige Verbindung hergestellt werden. Somit kann beispielsweise auf eine Verschraubung mit vorhergehendem Gewindeschneiden verzichtet werden, was die Herstellung der Waage vereinfacht.

Der untere Träger 2 ist analog genauso an der Wägezelle 3 befestigt, wie der obere Träger 1.

Die Wägezelle 3 ist in diesem Ausführungsbeispiel als Plattformwägezelle ausgebildet.

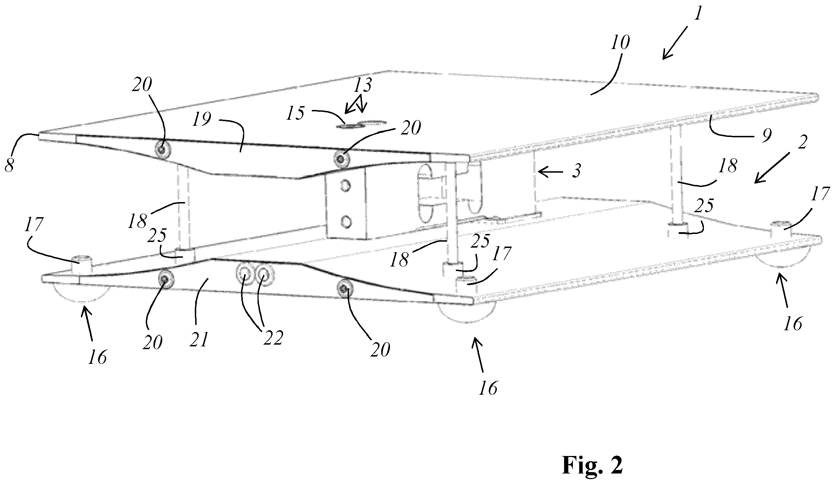

Fig. 2 zeigt eine andere Detailansicht des ersten Ausführungsbeispiels einer erfindungsgemäßen Waage, in der zu erkennen ist, dass die Stirnseiten des oberen Trägers 1 mit jeweils einer Abdeckblende 19 verschlossen sind. Die Abdeckblende 19 ist mittels Schrauben 20, insbesondere mittels metrischer Gewindeschrauben oder selbstschneidender oder gewindeformender Schrauben, befestigt. Die Verwendung selbstschneidender oder gewindeformender Schrauben ist von besonderem Vorteil, weil eine kostengünstige Befestigung ermöglicht wird; insbesondere, wenn das Gewindekernloch, als Befestigungselement 26 für die jeweilige Schraube, direkt bei dem Strangpressen mit ausgeformt wird. Alternativ oder zusätzlich können die Abdeckungen angeklebt sein. Es ist, alternativ oder zusätzlich, auch möglich, dass wenigstens eine Hohlkammern (insbesondere alle Hohlkammern) ganz oder teilweise mit einer Vergussmasse, insbesondere zum Schutz eines dort angeordneten Elektronikbauteils, aufgefüllt ist (sind).

Auch die stirnseitigen Öffnungen des unteren Trägers 2 sind mittels weiterer Abdeckblenden 21, die mit metrischen Schrauben 20 gehalten sind, verschlossen. Eine der weiteren Abdeckblenden 21 weist zwei Durchbrüche 22 auf, durch die (in dieser Figur nicht dargestellte) elektrische Leitungen geführt werden können. Die elektrischen Leitungen können durch den Hohlraum des unteren Trägers 2 bis zu der Wägezelle 3 und/oder zu einer elektronischen Schaltungsanordnung, insbesondere einer elektronischen Wägeelektronik und/oder Anzeigeelektronik, verlaufen.

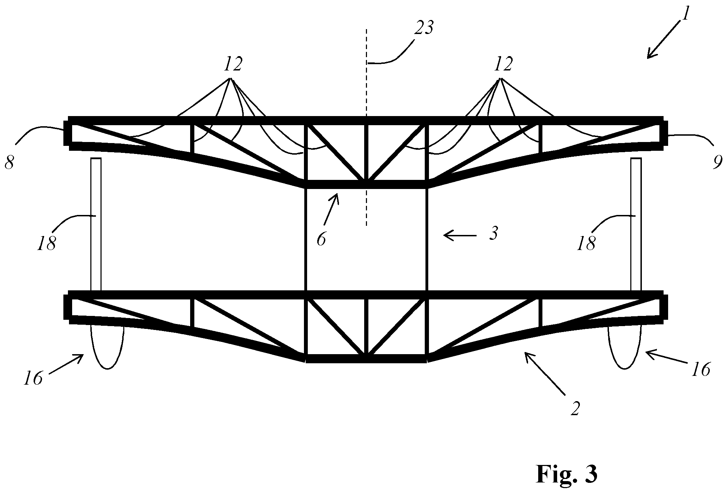

Figur 3 zeigt eine Detailansicht eines zweiten Ausführungsbeispiels einer erfindungsgemäßen Waage. Bei diesem Ausführungsbeispiel ist der obere Träger 1 aus einem Strangpressprofil ausgebildet, in dessen Hohlraum mehrere Stützstreben 12 angeordnet sind, die gemeinsam eine aussteifende Fachwerkkonstruktion bilden. Die Stützstreben 12 sind plattenartig ausgebildet und erstrecken sich entlang der Strangpressrichtung (senkrecht zur Zeichenebene). Der obere Träger 1 ist als Hohlkammerprofil im Strangpressverfahren samt seinen Stützstreben einstückig hergestellt.

Der obere Träger 1 ist in Bezug auf eine in Richtung seiner Höhe 7 und seiner Länge 4 (in dieser Figur senkrecht zur Zeichenebene) verlaufende Ebene 23 spiegelsymmetrisch ausgebildet.

Bei diesem Ausführungsbeispiel ist der untere Träger 2 im Wesentlichen genauso ausgebildet und genauso groß wie der obere Träger 1. An dem unteren Träger 2 sind Standfüße 16 angeordnet. Darüber hinaus sind der obere Träger 1 und der untere Träger 2 nicht spiegelsymmetrisch zueinander angeordnet, sondern vielmehr übereinanderliegend gleich ausgerichtet. Eine solche Ausführung hat den besonderen Vorteil, dass eine geringere Bauhöhe der gesamten Waage ermöglicht ist.

Der untere Träger 2 trägt außerdem mehrere Stangen 18, deren oberes Ende im unbelasteten Zustand der Waage in einem Abstand zu dem oberen Träger 1 enden. Die Stangen 18 fungieren als Überlastanschläge in der Weise, dass der obere Träger 1 auf den oberen Enden der Stangen 18 zu liegen kommt, bevor die maximal zulässige Belastung der Waage überschritten wird. Auf diese Weise wird die Wägezelle 3 im Fall einer Überbelastung mechanisch kurzgeschlossen und so vor einer Beschädigung geschützt.

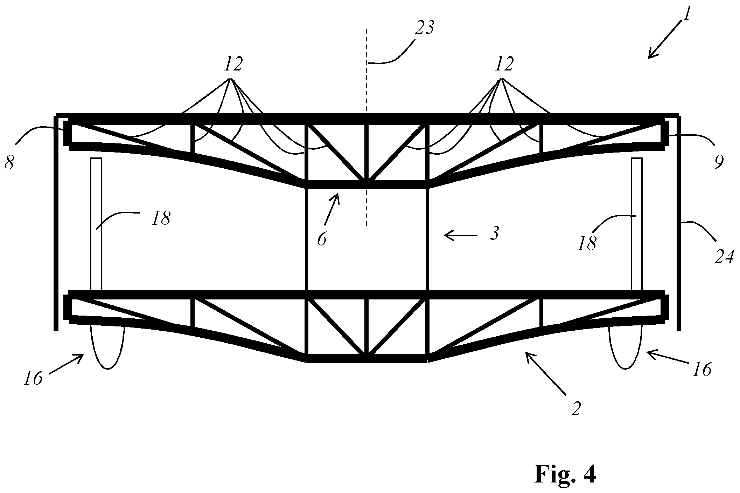

Figur 4 zeigt eine Detailansicht eines dritten Ausführungsbeispiels. Das dritte Ausführungsbeispiel unterscheidet sich von dem in Figur 3 dargestellten zweiten Ausführungsbeispiel durch eine Abdeckhaube 24, die umlaufend den Spalt zwischen dem oberen Träger 1 und dem unteren Träger 2 seitlich abdeckt. Die Abdeckhaube 24 liegt auf der Oberseite 10 des oberen Trägers 1 auf und ist von diesem getragen. Auf die Abdeckhaube 24 wird das zu wiegende Gut aufgelegt. Dies ist insbesondere vorteilhaft für die Verwiegung von Lebensmitteln und erleichtert die anschließende Reinigung insbesondere der Wägebrücke.

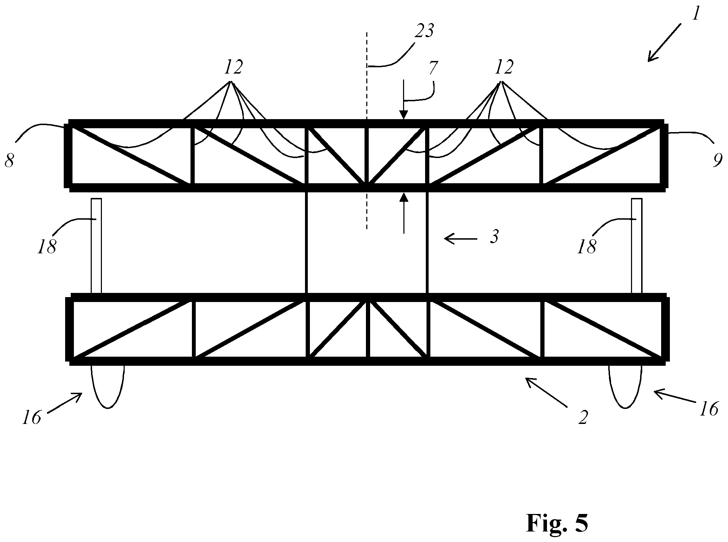

Figur 5 zeigt eine Detailansicht eines vierten Ausführungsbeispiels einer erfindungsgemäßen Waage. Bei dieser Ausführung ist der obere Träger 1 aus einem Strangpressprofil ausgebildet, in dessen Hohlraum Streben 12 in Form einer Fachwerksanordnung zur Aussteifung angeordnet sind. Im Gegensatz zu den übrigen Ausführungsbeispielen verjüngt sich der obere Träger zu seinen Rändern 8, 9 hin jedoch nicht. Vielmehr weist der obere Träger 1 überall dieselbe Höhe 7 auf. Der obere Träger 1 ist als Hohlkammerprofil im Strangpressverfahren samt seinen Stützstreben einstückig hergestellt. Der obere Träger 1 ist in Bezug auf eine in Richtung seiner Höhe 7 und seiner Länge 4 (in dieser Figur senkrecht zur Zeichenebene) verlaufende Ebene 23 spiegelsymmetrisch ausgebildet.

Der untere Träger 2 ist genauso aufgebaut, wie der obere Träger 1 und spiegelsymmetrisch zu dem oberen Träger 1 angeordnet.

An dem unteren Träger 2 sind Standfüße 16 angeordnet. Der untere Träger 2 trägt außerdem mehrere Stangen 18, deren oberes Ende im unbelasteten Zustand der Waage in einem Abstand zu dem oberen Träger 1 enden. Die Stangen 18 fungieren als Überlastanschläge in der Weise, dass der obere Träger 1 auf den oberen Enden der Stangen 18 zu liegen kommt, bevor die maximal zulässige Belastung der Waage überschritten wird. Auf diese Weise wird die Wägezelle 3 im Fall einer Überbelastung mechanisch kurzgeschlossen und so vor einer Beschädigung geschützt.

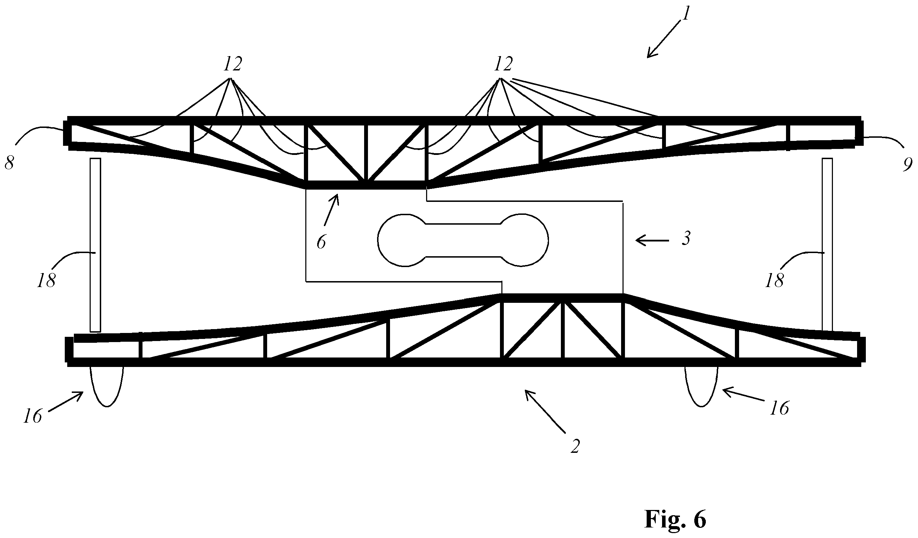

Figur 6 zeigt eine Detailansicht eines fünften Ausführungsbeispiels einer erfindungsgemäßen Waage. Bei diesem Ausführungsbeispiel ist der obere Träger 1 aus einem Strangpressprofil ausgebildet, in dessen Hohlraum mehrere Stützstreben 12 angeordnet sind, die gemeinsam eine aussteifende Fachwerkkonstruktion bilden. Die Stützstreben 12 sind plattenartig ausgebildet und erstrecken sich entlang der Strangpressrichtung (senkrecht zur Zeichenebene). Der obere Träger 1 ist als Hohlkammerprofil im Strangpressverfahren samt seinen Stützstreben einstückig hergestellt.

Der obere Träger 1 ist in Bezug auf alle in Richtung seiner Höhe 7 und seiner Länge 4 (in dieser Figur senkrecht zur Zeichenebene) verlaufenden Ebenen asymmetrisch ausgebildet.

Bei diesem Ausführungsbeispiel ist der untere Träger 2 genauso ausgebildet und genauso groß wie der obere Träger 1. An dem unteren Träger 2 sind Standfüße 16 angeordnet. Darüber hinaus sind der obere Träger 1 und der untere Träger 2 achsensymmetrisch zueinander angeordnet. Die Wägezelle 3 ist als Plattformwägezelle ausgebildet und anders als beispielsweise bei dem in den Figuren 1 und 2 gezeigten ersten Ausführungsbeispiel mit ihrer Längserstreckungsrichtung senkrecht zur Strangpressrichtung ausgerichtet.

Der untere Träger 2 trägt außerdem mehrere Stangen 18, deren oberes Ende im unbelasteten Zustand der Waage in einem Abstand zu dem oberen Träger 1 enden. Die Stangen 18 fungieren als Überlastanschläge in der Weise, dass der obere Träger 1 auf den oberen Enden der Stangen 18 zu liegen kommt, bevor die maximal zulässige Belastung der Waage überschritten wird. Auf diese Weise wird die Wägezelle 3 im Fall einer Überbelastung mechanisch kurzgeschlossen und so vor einer Beschädigung geschützt.

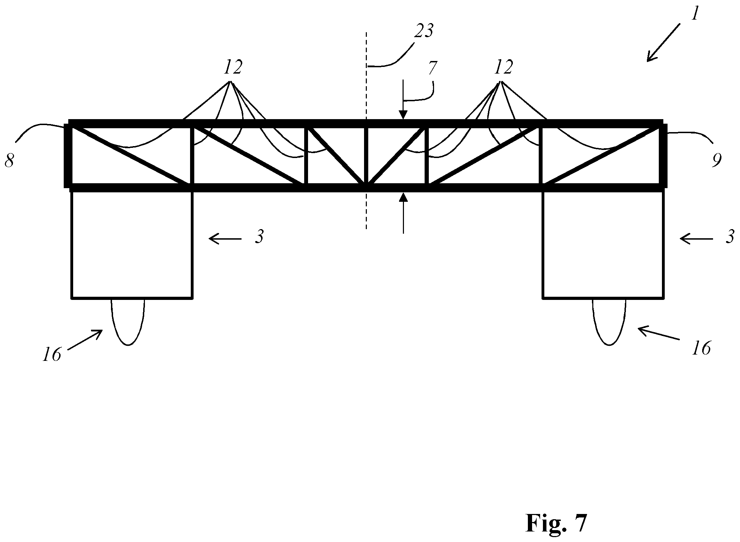

Figur 7 zeigt eine Detailansicht eines Ausführungsbeispiels einer Waage nach einem eigenständigen Erfindungsgedanken, die einen oberen Träger 1 aufweist, der mit einer von dem oberen Träger 1 separat hergestellten Wägezelle 3 verbunden ist, wobei der oberen Träger 1 als Hohlkörper ausgebildet ist, in dessen Hohlraum mehrere Stützstreben 12 angeordnet sind, die gemeinsam eine aussteifende Fachwerkkonstruktion bilden. Ein unterer Träger 2 ist bei dieser Waage nicht vorhanden. Die Waage weist mehrere Wägezellen 3 auf, wobei jede Wägezelle 3 einerseits mit dem oberen Träger 1 und andererseits mit jeweils einem eigenen Standfuß 16 verbunden ist.

Der obere Träger kann durch ein additives Herstellverfahren, insbesondere durch 3D-Druck oder durch Laminated Object Manufacturing (LOM) oder durch Selektives Lasersintern (SLS), hergestellt sein. Alternativ kann der der obere Träger aus einem Strangpressprofil hergestellt sein.

### Bezugszeichenliste:

- 1: oberer Träger
- 2: unterer Träger
- 3: Wägezelle
- 4: Länge
- 5: Breite
- 6: Mittenbereich
- 7: Höhe
- 8: erster Rand
- 9: zweite Rand
- 10: Oberseite
- 11: Außenseite
- 12: Stützstreben
- 13: Durchgangsbohrungen
- 14: Quersteg
- 15: Dosenlibelle
- 16: Standfüße
- 17: Befestigungsschaft
- 18: Stange
- 19: Abdeckblende
- 20: Schrauben
- 21: weitere Abdeckblende
- 22: Durchbruch
- 23: Ebene
- 24: Abdeckhaube
- 25: Gummielement
- 26: Elektronikplatine
- 27: Befestigungselement

## Patentansprüche

1. Waage mit einem oberen Träger und mit einem unteren Träger, die über eine von den Trägern separat hergestellte Wägezelle miteinander verbunden sind, wobei der obere Träger als Hohlkörper ausgebildet ist, der wenigstens einen Hohlraum aufweist, und/oder wobei der untere Träger als Hohlkörper ausgebildet ist, der wenigstens einen Hohlraum aufweist, **dadurch gekennzeichnet, dass**
a. der obere Träger und/oder der untere Träger durch ein additives Verfahren, insbesondere durch 3D-Druck oder durch Laminated Object Manufacturing (LOM) oder dass durch Selektives Lasersintern (SLS), hergestellt sind oder dass der obere Träger und der untere Träger jeweils aus einem Strangpressprofil hergestellt sind, und/oder dass
b. in dem Hohlraum wenigstens eine elektrische Leitung, insbesondere zu der Wägezelle, verläuft und/oder eine elektronische Schaltungsanordnung und/oder ein elektrischer Energiespeicher und/oder ein Spannungsversorgungsgerät angeordnet ist.

2. Waage nach Anspruch 1, **dadurch gekennzeichnet, dass** die Wägezelle eine Plattformwägezelle ist.

3. Waage nach Anspruch 1 oder 2, **dadurch gekennzeichnet, dass**
a. die Waage genau eine Wägezelle aufweist, oder dass
b. der obere Träger mit dem unteren Träger über mehrere von den Trägern separat hergestellte Wägezellen miteinander verbunden sind.

4. Waage nach einem der Ansprüche 1 bis 3, **dadurch gekennzeichnet, dass**
a. der obere Träger und der untere Träger gleich ausgebildet sind, und/oder dass
b. der obere Träger und der untere Träger die gleiche Form aufweisen, und/oder dass
c. der obere Träger und der untere Träger gleich groß sind, und/oder dass
d. der obere Träger und der untere Träger spiegelsymmetrisch zueinander angeordnet sind, und/oder dass
e. die Strangpressrichtung des oberen Trägers und die Strangpressrichtung des unteren Trägers zueinander parallel sind oder die Strangpressrichtung des oberen Trägers und die Strangpressrichtung des unteren Trägers in der Projektion auf die Horizontalebene senkrecht zueinander angeordnet sind.

5. Waage nach einem der Ansprüche 1 bis 4, **dadurch gekennzeichnet, dass**
a. der obere Träger eine von der Wägezelle weg gerichtete Oberseite aufweist, und/oder dass
b. der obere Träger eine von der Wägezelle weg gerichtete Oberseite aufweist, die als Wiegefläche ausgebildet ist, auf die das Wägegut unmittelbar positionierbar ist, und/oder dass
c. der obere Träger eine von der Wägezelle weg gerichtete Oberseite aufweist, die ein Abdeckelement, insbesondere eine Abdeckhaube, trägt, und/oder dass
d. der obere Träger eine von der Wägezelle weg gerichtete Oberseite aufweist, die ein Abdeckelement, insbesondere eine Abdeckhaube, trägt, das eine Wiegefläche aufweist, auf der das Wägegut unmittelbar positionierbar ist.

6. Waage nach einem der Ansprüche 1 bis 5, **dadurch gekennzeichnet, dass**
a. der obere Träger mehrere Hohlräume aufweist, und/oder dass
b. der untere Träger mehrere Hohlräume aufweist, und/oder dass
c. in dem Hohlraum wenigstens eine Stützstrebe und/oder ein Fachwerk angeordnet ist, und/oder dass
d. durch den Hohlraum hindurch wenigstens eine elektrische Leitung zu der Wägezelle verläuft, und/oder dass
e. die elektronische Schaltungsanordnung eine Wägeelektronik und/oder eine Anzeigeelektronik und/oder ein Spannungsversorgungsgerät und/oder einen Energiespeicher aufweist.

7. Waage nach einem der Ansprüche 1 bis 6, **dadurch gekennzeichnet, dass**
a. der obere Träger ohne ein Zusammenfügen mehrerer Teile einstückig hergestellt ist und/oder dass der untere Träger ohne ein Zusammenfügen mehrerer Teile einstückig hergestellt ist, und/oder dass
b. der obere Träger in Bezug auf keine horizontale Ebene symmetrisch ausgebildet ist, und/oder dass
c. der untere Träger in Bezug auf keine horizontale Ebene symmetrisch ausgebildet ist, und/oder dass
d. der obere Träger in Bezug auf eine vertikale Ebene symmetrisch ausgebildet ist, und/oder dass
e. der untere Träger in Bezug auf eine vertikale Ebene symmetrisch ausgebildet ist.

8. Waage nach einem der Ansprüche 1 bis 7, **dadurch gekennzeichnet, dass**
a. der obere Träger als flacher Körper ausgebildet ist, der eine Länge, eine Breite und eine Höhe aufweist, wobei die Höhe kleiner ist, als die Länge und als die Breite, und der sich wenigstens zu einem seiner Ränder hin, insbesondere zu zwei zueinander parallelen Rändern hin, in Bezug auf seine Höhe verjüngt, insbesondere senkrecht zur Strangpressrichtung in Bezug auf seine Höhe verjüngt, und/oder dass
b. der untere Träger als flacher Körper ausgebildet ist, der eine Länge, eine Breite und eine Höhe aufweist, wobei die Höhe kleiner ist, als die Länge und als die Breite, und der sich wenigstens zu einem seiner Ränder hin, insbesondere zu zwei zueinander parallelen Rändern hin, in Bezug auf seine Höhe verjüngt, insbesondere senkrecht zur Strangpressrichtung in Bezug auf seine Höhe verjüngt.

9. Waage nach einem der Ansprüche 1 bis 8, **dadurch gekennzeichnet, dass**
a. der obere Träger flach ausgebildet ist, und/oder dass
b. der obere Träger flach ausgebildet ist und in seiner Flächenausdehnung eine Länge und eine Breite aufweist, und/oder dass
c. der untere Träger flach ausgebildet ist, und/oder dass
d. der untere Träger flach ausgebildet ist und in seiner Flächenausdehnung eine Länge und eine Breite aufweist, und/oder dass
e. der obere Träger wenigstens eine, insbesondere von der Wägezelle abgewandte, ebene Außenseite aufweist, und/oder dass
f. der untere Träger wenigstens eine, insbesondere von der Wägezelle abgewandte, ebene Außenseite aufweist, und/oder dass
g. der obere Träger eine der Wägezelle zugewandte Außenseite aufweist, die in einem Mittelbereich eben ausgebildet ist, und/oder dass
h. der obere Träger eine der Wägezelle zugewandte Außenseite aufweist, die in einem Mittelbereich eben ausgebildet ist und die ausgehend von dem Mittelbereich jeweils zum Rand hin gekrümmt, insbesondere konkav gekrümmt, ausgebildet ist, und/oder dass
i. der untere Träger eine der Wägezelle zugewandte Außenseite aufweist, die in einem Mittelbereich eben ausgebildet ist, und/oder dass
j. der untere Träger eine der Wägezelle zugewandte Außenseite aufweist, die in einem Mittelbereich eben ausgebildet ist und die ausgehend von dem Mittelbereich jeweils zum Rand hin gekrümmt, insbesondere konkav gekrümmt, ausgebildet ist, und/oder dass
k. an dem unteren Träger Standfüße angeordnet sind.

10. Waage nach einem der Ansprüche 1 bis 9, **dadurch gekennzeichnet, dass**
a. der obere Träger und/oder der untere Träger jeweils wenigstens eine stirnseitig angeordnete Abdeckung tragen, und/oder dass
b. der obere Träger und/oder der untere Träger jeweils wenigstens eine stirnseitig angeordnete Abdeckung tragen, die wenigstens einen Durchbruch für eine elektrische Leitung oder für eine Befestigungsschraube aufweist.

11. Waage nach einem der Ansprüche 1 bis 10, **dadurch gekennzeichnet, dass**
a. der obere Träger aus einem Metall, insbesondere aus Aluminium, Edelstahl, Magnesium oder Titan, oder aus einer Metalllegierung, insbesondere einer Metalllegierung, die Aluminium, Edelstahl, Magnesium und/oder Titan beinhaltet, gefertigt ist, und/oder dass
b. der untere Träger aus einem Metall, insbesondere aus Aluminium, Edelstahl, Magnesium oder Titan, oder einer Metalllegierung, insbesondere einer Metalllegierung, die Aluminium, Edelstahl, Magnesium und/oder Titan beinhaltet, gefertigt ist.

12. Waage nach einem der Ansprüche 1 bis 11, **dadurch gekennzeichnet, dass**
a. der obere Träger aus Kunststoff gefertigt ist, und/oder dass
b. der untere Träger aus Kunststoff gefertigt ist.

13. Waage nach einem der Ansprüche 4 bis 12, **dadurch gekennzeichnet, dass** der obere Träger und der untere Träger abgetrennte Abschnitte desselben Rohstrangpressprofils sind oder dass der obere Träger und der untere Träger abgetrennte Abschnitte von zwei gleichen Rohstrangpressprofilen sind.

14. Waage nach einem der Ansprüche 1 bis 13, **dadurch gekennzeichnet, dass**
a. wenigstens ein Anschlagelement vorhanden ist, das einen Überlastanschlag aufweist, oder dass
b. wenigstens ein Anschlagelement vorhanden ist, das einen Überlastanschlag aufweist, wobei das Anschlagelement an dem oberen oder an dem unteren Träger befestigt ist, oder dass
c. wenigstens ein Anschlagelement vorhanden ist, das einen Überlastanschlag aufweist, wobei das Anschlagelement an dem oberen oder an dem unteren Träger durch eine Klemmverbindung und/oder durch eine Formschlussverbindung, insbesondere ausschließlich durch eine Klemmverbindung, befestigt ist.

15. Waage nach 14, **dadurch gekennzeichnet, dass** einer der Träger an dem Überlastanschlag anschlägt, bevor die maximal zulässige Belastung der Waage überschritten wird.

## Claims

1. Scales having an upper carrier and a lower carrier which are connected to each other via a load cell produced separately from the carriers, wherein the upper carrier is in the form of a hollow body which has at least one cavity, and/or wherein the lower carrier is in the form of a hollow body which has at least one cavity, **characterized in that**
a. the upper carrier and/or the lower carrier are produced by an additive process, in particular by 3D printing or by laminated object manufacturing (LOM) or by selective laser sintering (SLS), or **in that** the upper carrier and the lower carrier are each produced from an extruded profile, and/or **in that**
b. at least one electric line runs in the cavity, in particular to the load cell, and/or an electronic switching arrangement and/or an electrical energy store and/or a voltage supply device are/is arranged in the cavity.

2. Scales according to Claim 1, **characterized in that** the load cell is a platform load cell.

3. Scales according to Claim 1 or 2, **characterized in that**
a. the scales have precisely one load cell, or **in that**
b. the upper carrier and the lower carrier are connected to each other via a plurality of load cells produced separately from the carriers.

4. Scales according to one of Claims 1 to 3, **characterized in that**
a. the upper carrier and the lower carrier are identical, and/or **in that**
b. the upper carrier and the lower carrier are identical in shape, and/or **in that**
c. the upper carrier and the lower carrier are identical in size, and/or **in that**
d. the upper carrier and the lower carrier are arranged mirror-symmetrically to each other, and/or **in that**
e. the extrusion direction of the upper carrier and the extrusion direction of the lower carrier are parallel to each other, or the extrusion direction of the upper carrier and the extrusion direction of the lower carrier are arranged perpendicularly to each other in the projection onto the horizontal plane.

5. Scales according to one of Claims 1 to 4, **characterized in that**
a. the upper carrier has an upper side directed away from the load cell, and/or **in that**
b. the upper carrier has an upper side which is directed away from the load cell and is designed as a weighing surface on which the item to be weighed can be directly positioned, and/or **in that**
c. the upper carrier has an upper side which is directed away from the load cell and bears a covering element, in particular a covering hood, and/or **in that**
d. the upper carrier has an upper side which is directed away from the load cell and bears a covering element, in particular a covering hood, which has a weighing surface on which the item to be weighed can be directly positioned.

6. Scales according to one of Claims 1 to 5, **characterized in that**
a. the upper carrier has a plurality of cavities, and/or **in that**
b. the lower carrier has a plurality of cavities, and/or **in that**
c. at least one supporting strut and/or a framework is arranged in the cavity, and/or **in that**
d. at least one electric line runs through the cavity to the load cell, and/or **in that**
e. the electronic switching arrangement has weighing electronics and/or display electronics and/or a voltage supply device and/or an energy store.

7. Scales according to one of Claims 1 to 6, **characterized in that**
a. the upper carrier is produced in one piece without joining together a plurality of parts, and/or **in that** the lower carrier is produced in one piece without joining together a plurality of parts, and/or **in that**
b. the upper carrier is not formed symmetrically with respect to a horizontal plane, and/or **in that**
c. the lower carrier is not formed symmetrically with respect to a horizontal plane, and/or **in that**
d. the upper carrier is formed symmetrically with respect to a vertical plane, and/or **in that**
e. the lower carrier is formed symmetrically with respect to a vertical plane.

8. Scales according to one of Claims 1 to 7, **characterized in that**
a. the upper carrier is in the form of a flat body which has a length, a width and a height, wherein the height is smaller than the length and the width, and which flat body tapers with respect to its height at least towards one of its edges, in particular towards two edges which are parallel to each other, in particular tapers with respect to its height perpendicularly to the extrusion direction, and/or **in that**
b. the lower carrier is in the form of a flat body which has a length, a width and a height, wherein the height is smaller than the length and the width, and which flat body tapers with respect to its height at least towards one of its edges, in particular towards two edges which are parallel to each other, in particular tapers with respect to its height perpendicularly to the extrusion direction.

9. Scales according to one of Claims 1 to 8, **characterized in that**
a. the upper carrier is flat, and/or **in that**
b. the upper carrier is flat and has a length and a width in its surface extent, and/or **in that**
c. the lower carrier is flat, and/or **in that**
d. the lower carrier is flat and has a length and a width in its surface extent, and/or **in that**
e. the upper carrier has at least one level outer side, in particular facing away from the load cell, and/or **in that**
f. the lower carrier has at least one level outer side, in particular facing away from the load cell, and/or **in that**
g. the upper carrier has an outer side which faces the load cell and is level in a central region, and/or **in that**
h. the upper carrier has an outer side which faces the load cell and is level in a central region and which, starting from the central region, is in each case curved, in particular curved concavely, towards the edge, and/or in that
i. the lower carrier has an outer side which faces the load cell and is level in a central region, and/or **in that**
j. the lower carrier has an outer side which faces the load cell and is level in a central region and which, starting from the central region, is in each case curved, in particular curved concavely, towards the edge, and/or in that
k. standing feet are arranged on the lower carrier.

10. Scales according to one of Claims 1 to 9, **characterized in that**
a. the upper carrier and/or the lower carrier each bear at least one covering arranged on the end side, and/or in that
b. the upper carrier and/or the lower carrier each bear at least one covering which is arranged on the end side and has at least one aperture for an electric line or for a fastening screw.

11. Scales according to one of Claims 1 to 10, **characterized in that**
a. the upper carrier is manufactured from a metal, in particular from aluminium, stainless steel, magnesium or titanium, or from a metal alloy, in particular a metal alloy which contains aluminium, stainless steel, magnesium and/or titanium, and/or **in that**
b. the lower carrier is manufactured from a metal, in particular from aluminium, stainless steel, magnesium or titanium, or from a metal alloy, in particular a metal alloy which contains aluminium, stainless steel, magnesium and/or titanium.

12. Scales according to one of Claims 1 to 11, **characterized in that**
a. the upper carrier is manufactured from plastic, and/or **in that**
b. the lower carrier is manufactured from plastic.

13. Scales according to one of Claims 4 to 12, **characterized in that** the upper carrier and the lower carrier are severed portions of the same raw extruded profile, or **in that** the upper carrier and the lower carrier are severed portions of two identical raw extruded profiles.

14. Scales according to one of Claims 1 to 13, **characterized in that**
a. there is at least one stop element which has an overload stop, or **in that**
b. there is at least one stop element which has an overload stop, wherein the stop element is fastened to the upper or to the lower carrier, or **in that**
c. there is at least one stop element which has an overload stop, wherein the stop element is fastened to the upper or to the lower carrier by a clamping connection and/or by a form-fitting connection, in particular exclusively by a clamping connection.

15. Scales according to Claim 14, **characterized in that** one of the carriers strikes against the overload stop before the maximally permissible loading of the scales is exceeded.

## Revendications

1. Balance comportant un support supérieur et comportant un support inférieur qui sont reliés l'un à l'autre par le biais d'une cellule de pesage produite séparément des supports, le support supérieur étant réalisé sous forme de corps creux qui présente au moins un espace creux, et/ou le support inférieur étant réalisé sous forme de corps creux qui présente au moins un espace creux, **caractérisée en ce que**
a. le support supérieur et/ou le support inférieur sont produits par un procédé additif, en particulier par impression 3D ou par fabrication d'objets laminés (LOM) ou par frittage sélectif par laser (SLS), ou **en ce que** le support supérieur et le support inférieur sont produits respectivement à partir d'un profilé extrudé, et/ou **en ce que**
b. dans l'espace creux s'étend au moins une ligne électrique, en particulier jusqu'à la cellule de pesage et/ou est/sont disposé(s) un ensemble de circuits électroniques et/ou un accumulateur d'énergie électrique et/ou un appareil d'alimentation en tension.

2. Balance selon la revendication 1, **caractérisée en ce que** la cellule de pesage est une cellule de pesage à plate-forme.

3. Balance selon la revendication 1 ou 2, **caractérisée en ce que**
a. la balance présente exactement une cellule de pesage, ou **en ce que**
b. le support supérieur est relié au support inférieur par le biais de plusieurs cellules de pesage produites séparément des supports.

4. Balance selon l'une des revendications 1 à 3, **caractérisée en ce que**
a. le support supérieur et le support inférieur sont réalisés de manière identique, et/ou **en ce que**
b. le support supérieur et le support inférieur présentent la même forme, et/ou **en ce que**
c. le support supérieur et le support inférieur sont de même taille, et/ou **en ce que**
d. le support supérieur et le support inférieur sont disposés en symétrie miroir l'un par rapport à l'autre, et/ou **en ce que**
e. la direction d'extrusion du support supérieur et la direction d'extrusion du support inférieur sont parallèles l'une à l'autre ou la direction d'extrusion du support supérieur et la direction d'extrusion du support inférieur sont disposées perpendiculairement l'une à l'autre dans la projection sur le plan horizontal.

5. Balance selon l'une des revendications 1 à 4, **caractérisée en ce que**
a. le support supérieur présente un côté supérieur détourné de la cellule de pesage, et/ou **en ce que**
b. le support supérieur présente un côté supérieur détourné de la cellule de pesage, lequel est réalisé sous forme de surface de pesée sur laquelle le produit à peser peut être positionné directement, et/ou **en ce que**
c. le support supérieur présente un côté supérieur détourné de la cellule de pesage, lequel présente un élément de recouvrement, en particulier un capot de recouvrement, et/ou **en ce que**
d. le support supérieur présente un côté supérieur détourné de la cellule de pesage, lequel présente un élément de recouvrement, en particulier un capot de recouvrement, qui présente une surface de pesée sur laquelle le produit à peser peut être positionné directement.

6. Balance selon l'une des revendications 1 à 5, **caractérisée en ce que**
a. le support supérieur présente plusieurs espaces creux, et/ou **en ce que**
b. le support inférieur présente plusieurs espaces creux, et/ou **en ce que**
c. au moins un montant de support et/ou un treillis est/sont disposé(s) dans l'espace creux, et/ou **en ce que**
d. au moins une ligne électrique s'étend jusqu'à la cellule de pesage à travers l'espace creux, et/ou **en ce que**
e. l'ensemble de circuits électroniques présente un dispositif électronique de pesage et/ou un dispositif électronique d'affichage et/ou un appareil d'alimentation en tension et/ou un accumulateur d'énergie.

7. Balance selon l'une des revendications 1 à 6, **caractérisée en ce que**
a. le support supérieur est produit en une seule pièce sans assemblage de plusieurs parties et/ou **en ce que** le support inférieur est produit en une seule pièce sans assemblage de plusieurs parties, et/ou **en ce que**
b. le support supérieur n'est réalisé de manière symétrique par rapport à aucun plan horizontal, et/ou **en ce que**
c. le support inférieur n'est réalisé de manière symétrique par rapport à aucun plan horizontal, et/ou **en ce que**
d. le support supérieur est réalisé de manière symétrique par rapport à un plan vertical, et/ou **en ce que**
e. le support inférieur est réalisé de manière symétrique par rapport à un plan vertical.

8. Balance selon l'une des revendications 1 à 7, **caractérisée en ce que**
a. le support supérieur est réalisé sous forme de corps plat qui présente une longueur, une largeur et une hauteur, la hauteur étant inférieure à la longueur et à la largeur, et qui se rétrécit au moins vers l'un de ses bords, en particulier vers deux bords parallèles l'un à l'autre, par rapport à sa hauteur, en particulier se rétrécit perpendiculairement à la direction d'extrusion par rapport à sa hauteur, et/ou **en ce que**
b. le support inférieur est réalisé sous forme de corps plat qui présente une longueur, une largeur et une hauteur, la hauteur étant inférieure à la longueur et à la largeur, et qui se rétrécit au moins vers l'un de ses bords, en particulier vers deux bords parallèles l'un à l'autre, par rapport à sa hauteur, en particulier se rétrécit perpendiculairement à la direction d'extrusion par rapport à sa hauteur.

9. Balance selon l'une des revendications 1 à 8, **caractérisée en ce que**
a. le support supérieur est réalisé de manière plate, et/ou **en ce que**
b. le support supérieur est réalisé de manière plate et présente une longueur et une largeur dans sa superficie, et/ou **en ce que**
c. le support inférieur est réalisé de manière plate, et/ou **en ce que**
d. le support inférieur est réalisé de manière plate et présente une longueur et une largeur dans sa superficie, et/ou **en ce que**
e. le support supérieur présente au moins un côté extérieur plan, en particulier opposé à la cellule de pesage, et/ou **en ce que**
f. le support inférieur présente au moins un côté extérieur plan, en particulier opposé à la cellule de pesage, et/ou **en ce que**
g. le support supérieur présente un côté extérieur tourné vers la cellule de pesage, lequel est réalisé de manière plane dans une région centrale, et/ou **en ce que**
h. le support supérieur présente un côté extérieur tourné vers la cellule de pesage, lequel est réalisé de manière plane dans une région centrale et lequel est réalisé de manière incurvée, en particulier de manière incurvée de façon concave, à partir de la région centrale respectivement vers le bord, et/ou **en ce que**
i. le support inférieur présente un côté extérieur tourné vers la cellule de pesage, lequel est réalisé de manière plane dans une région centrale, et/ou **en ce que**
j. le support inférieur présente un côté extérieur tourné vers la cellule de pesage, lequel est réalisé de manière plane dans une région centrale et lequel est réalisé de manière incurvée, en particulier de manière incurvée de façon concave, à partir de la région centrale respectivement vers le bord, et/ou **en ce que**
k. des pieds de support sont disposés sur le support inférieur.

10. Balance selon l'une des revendications 1 à 9, **caractérisée en ce que**
a. le support supérieur et/ou le support inférieur portent respectivement au moins un recouvrement disposé du côté frontal, et/ou **en ce que**
b. le support supérieur et/ou le support inférieur portent respectivement au moins un recouvrement disposé du côté frontal, qui présente au moins une ouverture pour une ligne électrique ou pour une vis de fixation.

11. Balance selon l'une des revendications 1 à 10, **caractérisée en ce que**
a. le support supérieur est fabriqué à partir d'un métal, en particulier à partir d'aluminium, d'acier inoxydable, de magnésium ou de titane, ou à partir d'un alliage métallique, en particulier d'un alliage métallique qui contient de l'aluminium, de l'acier inoxydable, du magnésium et/ou du titane, et/ou **en ce que**
b. le support inférieur est fabriqué à partir d'un métal, en particulier à partir d'aluminium, d'acier inoxydable, de magnésium ou de titane, ou d'un alliage métallique, en particulier d'un alliage métallique qui contient de l'aluminium, de l'acier inoxydable, du magnésium et/ou du titane.

12. Balance selon l'une des revendications 1 à 11, **caractérisée en ce que**
a. le support supérieur est fabriqué à partir de matière synthétique, et/ou **en ce que**
b. le support inférieur est fabriqué à partir de matière synthétique.

13. Balance selon l'une des revendications 4 à 12, **caractérisée en ce que** le support supérieur et le support inférieur sont des tronçons détachés du même profilé extrudé brut ou **en ce que** le support supérieur et le support inférieur sont des tronçons séparés de deux profilés extrudés bruts identiques.

14. Balance selon l'une des revendications 1 à 13, **caractérisée en ce que**
a. au moins un élément de butée est présent, lequel présente une butée de surcharge, ou **en ce que**
b. au moins un élément de butée est présent, lequel présente une butée de surcharge, l'élément de butée étant fixé au support supérieur ou au support inférieur, ou **en ce que**
c. au moins un élément de butée est présent, lequel présente une butée de surcharge, l'élément de butée étant fixé au support supérieur ou au support inférieur par une liaison par serrage et/ou par une liaison par complémentarité de forme, en particulier exclusivement par une liaison par serrage.

15. Balance selon la revendication 14, **caractérisée en ce que** l'un des supports vient en butée contre la butée de surcharge avant que la charge maximale admissible de la balance ne soit dépassée.
